# FASCICULE DE BREVET EUROPEEN

(11) **EP 2 140 239 B1**
(45) Date de publication et mention de la délivrance du brevet: **16.10.2013**
(21) Numéro de dépôt: 08788193.4
(22) Date de dépôt: 17.04.2008
(51) Int. Cl.: G01J 5/20, G01J 5/24, H04N 5/217, H04N 5/33

(54) **PROCEDE DE MAINTENANCE D'UNE MATRICE DE DETECTEURS DU TYPE BOLOMETRES**
VERFAHREN ZUR ERHALTUNG EINER MATRIX AUS BOLOMETERARTIGEN DETEKTOREN
METHOD OF MAINTAINING A MATRIX OF BOLOMETER-TYPE DETECTORS

(30) Priorité: 26.04.2007 FR 0703037
(43) Date de publication de la demande: 06.01.2010
(73) Titulaire: SAGEM Défense Sécurité, 75015 Paris (FR)
(72) Inventeur: GARDETTE, Hubert, F-75015 Paris (FR); BECKER, Cyrille, F-75015 Paris (FR); DE MIJOLLA, François-Boris, F-75015 Paris (FR)
(74) Mandataire: Cabinet Plasseraud
(86) Numéro de dépôt international: PCT/FR2008/050680
(87) Numéro de publication internationale: WO 2008/145897

(56) Documents cités:
- US-A- 5 756 999
- US-B1- 6 465 785

## Description

La présente invention concerne un procédé de maintenance d'une matrice de détecteurs de type bolomètres. Elle concerne aussi un ensemble de mesure de radiations électromagnétiques qui comprend une matrice de détecteurs du type bolomètres, et qui est adapté pour mettre en oeuvre un tel procédé de maintenance.

Des détecteurs du type bolomètres sont utilisés pour mesurer une énergie rayonnante infrarouge, visible ou ultraviolette, qui est produite par une scène radiative. Ils peuvent être disposés selon une matrice, telle qu'une matrice à plan focal couramment désigné par «FPA», pour «Focal Plan Array». De telles matrices FPA de détecteurs du type bolomètres sont décrites dans les documents WO 2006/100662 et WO 2006/100663, par exemple.

Une structure à pont de Wheatstone ou une structure différentielle est aussi couramment utilisée dans les matrices de détecteurs du type bolomètres. Une telle structure est représentée sur la figure 1 du document FR 2 846 666, notamment. Elle permet de réduire la sensibilité des résultats des mesures qui sont fournies par les détecteurs, par rapport à des variations d'une température ambiante interne à l'ensemble de mesure qui comprend la matrice.

Par ailleurs, l'élément de chaque détecteur du type bolomètre qui est sensible aux radiations électromagnétiques est un élément résistif électriquement, dont la résistance électrique varie lorsque le détecteur reçoit une radiation. Cette variation produit la mesure de la radiation. De manière courante, l'élément résistif sensible aux radiations est en oxyde de vanadium (VOₓ) ou en silicium amorphe.

Toutefois, les matrices de détecteurs du type bolomètres restent très sensibles aux variations de température ambiante.

Par ailleurs, du fait que chaque détecteur a un emplacement qui est différent au sein la matrice, des détecteurs distincts reçoivent des radiations différentes. Celles-ci sont susceptibles de modifier les caractéristiques de chaque détecteur, ainsi que ses paramètres d'utilisation en mesure, d'une façon variable entre des détecteurs distincts. De plus, des disparités initiales existent entre les détecteurs dès la fabrication de la matrice, concernant des propriétés individuelles des détecteurs telles que leurs résistances électriques et leurs sensibilités de réponse. Ces disparités initiales contribuent aussi aux variations qui existent entre les réponses respectives des détecteurs d'une même matrice lorsque celle-ci reçoit une énergie radiative uniforme.

Autrement dit, une même radiation risque d'être mesurée avec une valeur différente en fonction de l'emplacement dans la matrice du détecteur qui est utilisé pour sa mesure.

A cause de cela, il est connu de corriger les écarts entre les détecteurs du type bolomètres d'une même matrice en compensant, pour chaque détecteur, des variations de décalage initial («offset» en anglais) et de gain.

Pour ce faire, des caractéristiques de chaque détecteur du type bolomètre, telles que son décalage initial et son gain, sont déterminées par des mesures préalables qui sont réalisées à des températures prédéfinies et constantes. Deux tables («look up tables» en anglais) en sont déduites, respectivement pour les gains et les décalages initiaux des détecteurs de la matrice. Elles permettent de compenser le décalage initial et le gain de chaque détecteur. Il s'agit de corrections qui sont appliquées aux résultats de détection produits par les détecteurs après que les radiations ont été détectées.

Toutefois, pour que les mesures qui sont obtenues avec tous les détecteurs d'une même matrice soient précises et cohérentes, il est nécessaire de mettre à jour régulièrement, en général toutes les deux à trois minutes, au moins la table de correction des décalages initiaux. Cela peut être réalisé en exposant l'ensemble des détecteurs de la matrice à une image uniforme. Une telle opération est réalisée usuellement à l'aide d'un obturateur qui masque uniformément une scène radiative externe par rapport à l'ensemble de mesure.

Néanmoins, le présent demandeur a constaté que, même si la table de correction des décalages initiaux et/ou celle des gains des détecteurs de la matrice sont mises à jour fréquemment ou régulièrement, cela ne permet pas de supprimer des rémanences qui résultent de surexpositions qui ont été subies par certains détecteurs du type bolomètre. Une telle surexposition peut résulter d'une exposition de certains au moins des détecteurs de la matrice à un flux radiatif intense et/ou de longue durée. Ce flux a provoqué une altération durable des caractéristiques des détecteurs qui l'ont reçu. Une telle surexposition peut être assimilée à un éblouissement dont l'effet perdure. Par exemple, l'exposition au soleil pendant quelques secondes d'un détecteur du type bolomètre qui est destiné à réaliser des mesures nocturnes produit une rémanence de surexposition. Cette rémanence peut durer plusieurs jours, voire plusieurs semaines, et peut être expliquée par une altération du matériau de l'élément résistif du bolomètre qui est sensible aux radiations. Une telle altération est d'autant plus vraisemblable que ce matériau sensible est en général dans un état d'équilibre instable, quant à son état physico-chimique réel. L'altération du matériau sensible de certains des détecteurs de la matrice produit alors des décalages des résultats des mesures ultérieures. Ces décalages apparaissent comme une image «fantôme» de la surexposition, qui est superposée aux images qui résultent d'expositions ultérieures.

In est donc particulièrement intéressant de proposer un procédé qui permette de réajuster l'état de détecteurs du type bolomètres qui ont subi une surexposition radiative, afin de retrouver une uniformité de réponse de tous les détecteurs d'une matrice.

Pour cela, il a été proposé de réinitialiser les détecteurs d'une matrice à microbolomètres en les réchauffant au moyen d'un élément Peltier qui est situé sous la matrice. Tous les détecteurs de la matrice sont ainsi chauffés jusqu'à une même température, et peuvent être refroidis ensemble d'une même manière. Ainsi, des rémanences de surexposition présentes dans certains des détecteurs de la matrice peuvent être supprimées. Un tel chauffage constitue un procédé de maintenance, qui est mis en oeuvre en dehors de périodes d'utilisation de la matrice de détecteurs pour effectuer des mesures de radiations.

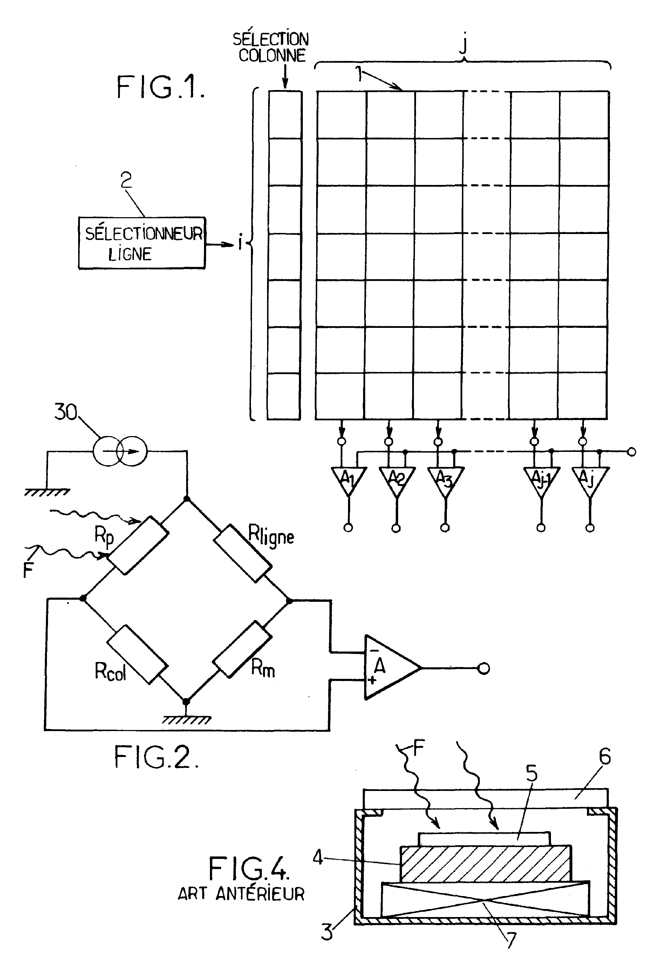

La figure 4 représente un ensemble de mesure de radiations électromagnétiques, auquel un tel procédé de maintenance peut être appliqué. L'ensemble comprend un boîtier 3 qui est hermétiquement clos et dont l'intérieur reste sous vide. Un circuit imprimé 5 est disposé sur un substrat 4 à l'intérieur du boîtier 3. Le circuit 5 comporte des résistances électriques qui constituent les détecteurs du type bolomètres. Ces résistances sont sensibles aux radiations électromagnétiques F et sont exposées à travers une fenêtre transparente 6 qui ferme le boîtier 3. Un élément Peltier 7 est en outre placé sous le substrat 4, pour permettre de chauffer les résistances sensibles aux radiations.

Mais cette méthode présente plusieurs inconvénients. D'une part, elle nécessite de prévoir un élément Peltier sous la matrice des détecteurs, ce qui augmente le prix et l'encombrement de l'ensemble de mesure. D'autre part, l'élément Peltier rend plus complexe les échanges thermiques qui interviennent au sein de l'ensemble de mesure pendant qu'une radiation est détectée. Enfin, l'élément Peltier génère une consommation importante d'énergie électrique pendant le chauffage de la matrice, ainsi que pendant son refroidissement à vitesse contrôlée.

Il est donc particulièrement intéressant de disposer d'une méthode d'uniformisation des réponses des détecteurs d'une matrice de type FPA, qui ne nécessite pas une consommation importante d'énergie électrique, ni l'ajout de composants supplémentaires tels qu'un élément Peltier.

Dans ce but, le document US 5,756,999 propose un cycle de mesure qui comprend, préalablement à chaque exposition d'une matrice de détecteurs du type bolomètres pour effectuer une mesure radiative, un chauffage des détecteurs en utilisant les éléments résistifs de ceux-ci qui sont sensibles au rayonnement. Aucun élément Peltier n'est ainsi nécessaire. Mais il s'agit d'un chauffage d'ajustement du point de fonctionnement de chaque détecteur, qui est effectué juste avant chaque exposition de mesure radiative. Un tel chauffage modifie réversiblement le point de fonctionnement de chaque détecteur avant que celui-ci soit exposé à la radiation pour la mesure. Il s'agit d'un ajustement du point de fonctionnement qui est réalisé en suivant une courbe d'états du détecteur dans un système d'axes résistance-température. Le chauffage doit donc être réalisé juste avant chaque exposition de mesure radiative, et ne constitue pas une opération de maintenance de l'ensemble de mesure de radiations, qui serait séparée des opérations de mesure. En outre, un tel chauffage n'est pas adapté pour supprimer des rémanences de surexposition radiative.

Un objet de la présente invention est donc d'uniformiser des détecteurs de type bolomètres d'une matrice FPA qui présentent au moins une rémanence causée par surexposition radiative. Plus particulièrement, l'invention a pour but d'arrêter des rémanences qui pourraient avoir été provoquées par des sources radiatives intenses ou qui ont des températures élevées.

Un autre objet de l'invention est d'uniformiser spatialement les détecteurs du type bolomètre d'une matrice FPA.

Un autre objet de l'invention est de proposer un procédé d'uniformisation des détecteurs du type bolomètres d'une matrice FPA, qui peut supprimer des disparités présentes entre des détecteurs distincts de la matrice, et notamment des disparités qui résultent de leur fabrication ou d'un mauvais vieillissement.

Un autre objet de l'invention est de proposer un procédé d'uniformisation des détecteurs du type bolomètres d'une matrice FPA, qui peut supprimer des disparités de décalages initiaux et/ou de gains, présentes entre des détecteurs distincts de la matrice.

Un autre objet de l'invention est de réaliser une telle uniformisation sans nécessiter de consommation importante d'énergie électrique, ni de la part d'une source énergétique interne à l'ensemble de mesure radiative qui comprend la matrice de détecteurs, ni de la part d'une source énergétique extérieure à cet ensemble.

Un autre objet de l'invention est de réaliser une telle uniformisation sans utiliser d'élément de chauffage du type élément Peltier ou four associé à l'ensemble de mesure.

Un autre objet de l'invention est de réaliser une telle uniformisation en atteignant des températures supérieures 100°C uniquement pour l'élément sensible du détecteur, sans chauffer ni dégrader de façon irréversible le circuit de lecture et d'adressage CMOS qui est situé sous le détecteur. Une telle dégradation pourrait se produire lors de l'utilisation d'un four ou d'un élément Peltier.

Un autre objet de l'invention est qu'une telle uniformisation puisse être réalisée aussi bien par l'utilisateur de l'ensemble de mesure radiative que par un service de maintenance spécialisé.

Un autre objet de l'invention est de proposer un procédé d'uniformisation applicable aussi bien à une partie qu'à la totalité des détecteurs d'une matrice FPA.

Un autre objet de l'invention est enfin de proposer un procédé d'uniformisation des détecteurs du type bolomètres d'une matrice FPA, qui ne crée aucun risque significatif de dégazage ni de dégradation du niveau de vide présent dans un boîtier qui contient la matrice des détecteurs.

Selon un premier de ses aspects, la présente invention propose un procédé de maintenance d'une matrice de détecteurs de type bolomètres, qui sont adaptés pour mesurer des radiations électromagnétiques issues d'une scène radiative. Ce procédé est adapté pour arrêter une rémanence d'une surexposition radiative qui a été subie par au moins un des détecteurs de la matrice. Il comprend les étapes |1|-|4| selon la revendication 1.

Ainsi, selon l'invention, chaque détecteur peut être chauffé en fonction d'une valeur de température et/ou de résistance qui a été déterminée initialement pour ce détecteur. De cette façon, une modification ou réinitialisation est apportée au détecteur, qui peut être indépendante de l'état initial des autres détecteurs, et adaptée en fonction de déviations particulières caractérisées pour ce détecteur. Notamment, la modification ou la réinitialisation qui est apportée à un détecteur peut être adaptée à une éventuelle surexposition qu'a subie antérieurement ce détecteur.

Pour cela, selon une mise en oeuvre préférée de l'invention, la température-seuil et/ou la résistance-seuil peut être fixée à l'étape /2/ en fonction d'un écart entre la température et/ou la résistance qui a été mesurée à l'étape /1/ pour le détecteur identifié, et une valeur de référence de température et/ou de résistance, respectivement.

Le procédé de l'invention peut aussi comprendre en outre une étape de mesure des températures et/ou des résistances respectives des détecteurs d'une partie au moins de la matrice. Dans ce cas, la température-seuil et/ou la résistance-seuil du détecteur identifié peut être fixée à l'étape /2/ en fonction des températures et/ou des résistances qui ont été mesurées pour les détecteurs de cette partie de la matrice, en plus de la température et/ou de la résistance mesurée pour le détecteur identifié.

Eventuellement, le procédé de maintenance peut comprendre une étape supplémentaire de sélection du détecteur identifié. Cette étape supplémentaire est exécutée entre les étapes /1/ et /2/. Ensuite, les étapes /2/ à /4/ ne sont exécutées pour le détecteur identifié que si la température et/ou de la résistance qui a été mesurée à l'étape /1/ pour ce détecteur satisfont une condition de sélection fixée.

Notamment, cette condition de sélection peut être fixée de sorte que le détecteur identifié est sélectionné pour les étapes /2/ à /4/ s'il présente une rémanence d'une surexposition radiative ou d'une dégradation qu'il aurait subie antérieurement.

Chaque détecteur qui est identifié est chauffé par effet Joule lors de l'étape /3/, de façon à le ramener dans un état de référence ou dans un état qui est proche de celui d'une partie au moins des autres détecteurs de la matrice. En particulier, le matériau de son élément résistif qui est sensible aux radiations peut être remis ainsi dans un état physique et/ou chimique prédéterminé. Notamment, l'étape /3/ peut produire une stabilisation structurelle du matériau de cet élément résistif sensible, ou une ré-adsorption d'atomes oxydants, en fonction de la nature de ce matériau.

D'une façon plus générale, l'étape /3/ d'un procédé selon l'invention peut être exécutée de façon à modifier un matériau du détecteur identifié, qui est sensible aux radiations électromagnétiques lors d'un cycle de mesure des radiations.

Pour cela, le détecteur qui est identifié peut être chauffé à l'étape /3/ jusqu'à une température adéquate, et pendant une durée appropriée.

Notamment, il peut être chauffé jusqu'à une température qui est supérieure à 60°C, de préférence supérieure à 100°C.

De même, l'étape /3/ peut être exécutée de façon à maintenir le détecteur identifié pendant une durée d'au moins une minute à une température qui est supérieure ou égale à la température-seuil, et/ou à une résistance qui est inférieure ou égale à la résistance seuil, déterminée pour ce détecteur identifié.

En outre, pour ramener le détecteur identifié dans un état qui est plus stable, en évitant un effet de trempe, le refroidissement de l'étape /4/ peut avoir une durée qui est supérieure à au moins deux minutes, voire supérieure à dix minutes.

Selon une première variante de l'invention, l'élément résistif de détecteur qui est utilisé à l'étape /3/ pour chauffer le détecteur identifié peut appartenir à ce dernier. Dans ce cas, il peut comprendre le matériau qui est modifié à la même étape.

Selon une seconde variante de l'invention, le chauffage de l'étape /3/ peut être réalisé avec au moins un élément résistif d'un détecteur de la matrice qui est différent de celui qui est identifié.

Dans ces deux variantes de l'invention, plusieurs détecteurs qui sont identifiés peuvent être traités simultanément selon les étapes /2/ à /4/ du procédé de maintenance de l'invention, en étant chauffés chacun lors d'une même exécution de l'étape /3/. La durée totale du procédé de maintenance, exécuté pour cette pluralité de détecteurs identifiés, peut ainsi être réduite par rapport à plusieurs exécutions successives du procédé qui seraient respectivement dédiées aux mêmes détecteurs, pris un à un. Pour cela, l'étape /1/ du procédé de maintenance peut être réalisée pour plusieurs détecteurs identifiés. Des courants électriques sont alors alimentés à l'étape /3/ simultanément à des éléments résistifs respectifs de plusieurs détecteurs de la matrice. Ces courants électriques peuvent être déterminés en utilisant un algorithme de traitement des températures et/ou des résistances qui ont été mesurées respectivement pour les détecteurs identifiés, de façon à les chauffer simultanément. En particulier, les détecteurs identifiés peuvent être chauffés simultanément jusqu'à une température maximale commune.

Dans tous les cas, aucun élément additionnel de chauffage n'est nécessaire pour mettre en oeuvre l'invention, par rapport aux éléments résistifs des détecteurs de la matrice. En particulier, aucun élément Peltier ni four de chauffage n'est nécessaire.

Selon un perfectionnement de l'invention, un procédé de maintenance conforme à l'invention peut être exécuté automatiquement. De plus, il peut être démarré automatiquement, par exemple à intervalles de temps réguliers ou en fonction du nombre de mesures de radiations qui ont été effectuées depuis une dernière exécution antérieure du procédé de maintenance.

Selon un second aspect de la présente invention, celle-ci propose aussi un ensemble de mesure de radiations électromagnétiques issues d'une scène radiative, selon la revendication 14.

Un tel ensemble de mesure est adapté pour la mise en oeuvre d'un procédé de maintenance conforme au premier aspect de l'invention.

Eventuellement, les moyens de maintenance peuvent aussi être adaptés pour contrôler une exécution automatique du procédé de maintenance.

Selon un example qui ne fait pas partie de la présente invention, celle-ci propose aussi un procédé de maintenance d'une matrice de i x j détecteurs du type bolomètres, le procédé comprenant les étapes suivantes :
- fourniture d'une matrice de i x j détecteurs du type bolomètres pour la détection et la mesure de la radiation électromagnétique issue d'une scène radiative ;
- mesure de la température et/ou de la résistance d'un élément résistif d'au moins un des i x j détecteurs ;
- fixation d'une température-seuil et/ou d'une résistance-seuil, supérieure à la température et/ou la résistance mesurée, à laquelle doit être amené ledit au moins un des i x j détecteurs ;
- alimentation en courant d'au moins un élément résistif dudit au moins un des i x j détecteurs, en dehors des périodes de détection et/ou de mesure des radiations issues de la scène radiative ;
- dissipation de chaleur par effet Joule issue dudit élément résistif alimenté ;
- échauffement dudit au moins un des i x j détecteurs comprenant ledit élément résistif alimenté jusqu'à ladite température-seuil ou résistance-seuil ; et
- contrôle du refroidissement dudit au moins un des i x j détecteurs par asservissement du courant alimenté et de la puissance par effet Joule dissipée au cours du temps.

Afin de permettre la maintenance et la ré-uniformisation de tout ou partie des i x j détecteurs, il peut être prévu une étape de mesure de la température et/ou de la résistance de tout ou partie des i x j détecteurs.

De manière à uniformiser la température et/ou la résistance des i x j détecteurs, la valeur de la température-seuil et/ou de la résistance-seuil peut être fixée en fonction de la température et/ou de la résistance de l'ensemble des i x j détecteurs.

Afin d'automatiser un procédé conforme à un example qui ne fait pas partie de l'invention, ce procédé peut comprendre une étape de traitement des températures et/ou des résistances mesurées. Ce traitement peut être effectué à l'aide d'un algorithme de traitement de données qui permet de déterminer la valeur des courants à fournir aux éléments résistifs des i x j détecteurs de la matrice pour que la température et/ou la résistance d'au moins un élément résistif d'au moins une partie de l'ensemble des i x j détecteurs atteigne la même valeur de température-seuil et/ou de résistance-seuil après formation d'un effet Joule issu des éléments résistifs alimentés en courant.

Afin de sélectionner les détecteurs à alimenter en courant, le procédé peut comprendre une étape de sélection des détecteurs à alimenter en courant et/ou une étape d'alimentation en courant des détecteurs sélectionnés, qui est (sont) réalisée(s) à partir d'un adressage du type CMOS.

Selon un autre example qui ne fait pas partie de la présente invention, elle propose enfin un ensemble matriciel à plan focal comprenant une matrice de i x j détecteurs du type bolomètres et des moyens de maintenance de cette matrice, les moyens de maintenance comprenant eux-mêmes :
- des moyens de mesure de la température et/ou de la résistance d'au moins un élément résistif de chacun des i x j détecteurs du type bolomètres ;
- des moyens d'uniformisation de la température et/ou de la résistance d'au moins un élément résistif d'au moins une partie de l'ensemble des i x j détecteurs du type bolomètres à l'aide des mesures relevées par les moyens de mesure, les moyens d'uniformisation comprenant eux-mêmes :
   - une unité de traitement des mesures de la température et/ou de la résistance d'au moins un élément résistif d'au moins un des i x j détecteurs, relevées par les moyens de mesure ;
   - une unité de commande de l'alimentation en courant des i x j détecteurs ;
   - une unité de calcul du courant à appliquer par l'unité de commande de l'alimentation en courant au dit au moins un des i x j détecteurs pour que ledit au moins un des i x j détecteurs atteigne une température-seuil et/ou une résistance-seuil après dissipation d'énergie par effet Joule ; et
   - une unité de calcul d'asservissement du courant à appliquer par l'unité de commande de l'alimentation en courant au dit au moins un des i x j détecteurs pour que ledit au moins un des i x j détecteurs suive un cycle de refroidissement contrôlé au cours du temps.

La présente invention est maintenant décrite à l'aide d'un exemple de mise en oeuvre qui est donné à but illustratif uniquement, et nullement limitatif, conformément aux figures jointes en annexe dans lesquelles :
- la figure 1 est une représentation schématique simplifiée d'une matrice de détecteurs de type bolomètres, à laquelle l'invention peut être appliquée ;
- la figure 2 est une représentation schématique d'une structure à pont de Wheatstone d'un détecteur du type bolomètre, à laquelle l'invention peut être appliquée ;

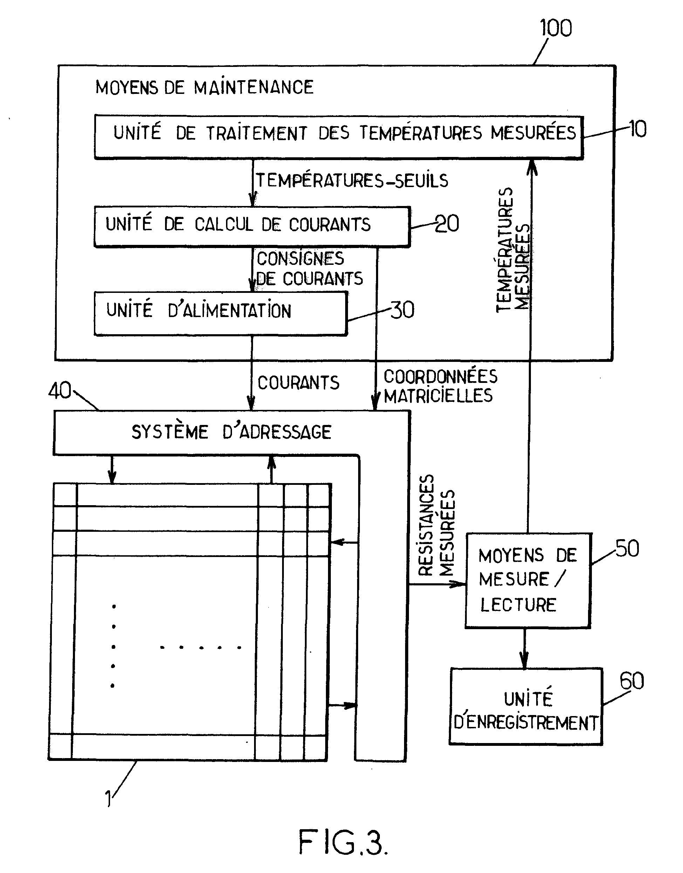

- la figure 3 est un schéma synoptique d'un ensemble de mesure de radiations auquel l'invention peut être appliquée ; et
- la figure 4, déjà décrite, est une vue en coupe simplifiée de la structure générale d'une matrice à plan focal de détecteurs du type bolomètres, telle que connue de l'art antérieur.

Comme représenté sur la figure 1, une matrice 1 du type FPA présente i lignes et j colonnes de détecteurs du type bolomètres. Elle comprend donc i x j détecteurs. La mesure et la lecture des signaux de détection qui sont produits respectivement par les détecteurs sont réalisées en sélectionnant d'abord une des i lignes de la matrice 1, à l'aide d'un sélectionneur de lignes référencé 2.

Après qu'une ligne a été sélectionnée, les signaux de détection qui sont produits par les détecteurs de cette ligne sont enregistrés et transmis à des entrées d'amplificateurs référencés A₁ - Aⱼ sur la figure. Les amplificateurs A₁ - Aⱼ sont dédiés respectivement aux colonnes de la matrice 1.

Pour produire une mesure différentielle, tous les détecteurs de la matrice 1 peuvent être inclus dans une structure à pont de Wheatstone telle que représentée sur la figure 2. Cette structure comprend :
- une résistance Rₚ pour chaque détecteur du type bolomètre de la matrice 1, qui est sensible aux radiations électromagnétiques F et appelé résistance active ;
- une résistance de ligne, qui est notée R_{ligne} et qui est commune à tous les détecteurs d'une même ligne de la matrice 1 ;
- une résistance Rₘ qui est commune à tous les détecteurs de la matrice 1 ; et
- une résistance de colonne, qui est notée R_{col} et qui est commune à tous les détecteurs d'une même colonne de la matrice 1.

La matrice 1 comprend ainsi i x j résistances Rₚ, j résistances R_{col}, i résistances R_{ligne} et une seule résistance Rₘ. Toutefois, il est possible de concevoir chacune de ces résistances Rₚ, R_{ligne}, R_{col} et Rₘ sous la forme de plusieurs résistances connectées en parallèle.

La résistance active Rₚ de chaque détecteur est isolée thermiquement, et exposée aux radiations électromagnétiques F qui sont issues d'une scène vers laquelle est orienté l'ensemble de mesure de radiations.

Les résistances de ligne R_{ligne}, de colonne R_{col} et la résistance Rₘ sont masquées par rapport aux radiations électromagnétiques F issues de la scène.

Les résistances Rₘ et R_{col} sont maintenues en bon contact thermique avec un substrat de la matrice 1.

Les caractéristiques individuelles des détecteurs peuvent présenter des disparités de fabrication. Ces disparités résultent par exemple de certains paramètres du procédé de fabrication qui sont contrôlés avec une précision limitée sur l'étendue de la matrice 1. De telles disparités peuvent concerner, notamment, les résistivités électriques et thermiques des matériaux qui sont compris dans chaque détecteur, leurs coefficients de variation thermique, ainsi que leurs capacités thermiques.

Un procédé de maintenance conforme à l'invention, qui est appliqué à une telle matrice de détecteurs du type bolomètres, est maintenant décrit.

Lors d'une première étape, la température et/ou la résistance d'au moins une des résistances actives Rₚ est mesurée. Eventuellement, une telle mesure peut être effectuée pour plusieurs ou toutes les résistances Rₚ de la matrice 1. L'Homme du métier comprendra que, étant donné le principe de fonctionnement d'un bolomètre qui est basé sur une relation entre la température et la valeur de résistance électrique d'un élément résistif, une mesure de la valeur d'une résistance active Rₚ est équivalente à une mesure de sa température. Pour cela, l'ensemble de mesure de radiations comporte des moyens de mesure de température/résistance qui sont couplés aux résistances actives Rₚ par des moyens d'adressage appropriés. A l'issue de cette première étape, une valeur de résistance/température mesurée est disponible pour certaines des résistances actives Rₚ de la matrice 1.

Eventuellement, cette première étape peut être réalisée alors qu'un obturateur a été placé devant la matrice 1, pour l'isoler de radiations provenant de l'extérieur de l'ensemble de mesure.

Lors d'une deuxième étape du procédé de maintenance, ces valeurs mesurées sont utilisées pour déterminer, pour chaque résistance active Rₚ, une valeur-seuil de température/résistance jusqu'à laquelle cette résistance active doit être chauffée.

Pour cela, selon une première méthode, la valeur qui est mesurée pour chaque résistance active Rₚ peut être comparée à une valeur de référence. Un écart entre la valeur mesurée et la valeur de référence peut avoir été provoqué par une surexposition qui a été subie antérieurement par le détecteur concerné, et l'amplitude de cet écart être reliée à l'intensité de la surexposition. Autrement dit, certaines caractéristiques de la résistance active Rₚ du détecteur ont été altérées de façon durable, et l'un des objectifs du procédé de maintenance est de ramener ce détecteur dans un état de référence. La valeur-seuil de température/résistance pour chaque détecteur auquel le procédé est appliqué peut être déterminée à partir de cet écart, par exemple en appliquant une relation enregistrée ou en utilisant une table de correspondance qui associe des valeurs-seuils à des valeurs d'écart obtenues.

Lorsque le procédé de maintenance est appliqué pour la première fois à la matrice 1, il peut aussi supprimer des disparités qui sont présentes entre des détecteurs distincts, et qui résultent de la fabrication de la matrice.

Selon une seconde méthode, la valeur qui est mesurée pour chaque résistance active Rₚ peut être fixée en fonction des températures et/ou des résistances qui sont mesurées respectivement pour les détecteurs d'une partie de la matrice 1. Par exemple, la valeur mesurée pour une résistance active Rₚ peut être comparée à une moyenne des valeurs mesurées pour les détecteurs de la partie de matrice. Cette seconde méthode peut permettre, notamment, de prendre en compte un vieillissement d'ensemble des détecteurs qui est accepté.

Eventuellement, lorsque la valeur qui est mesurée pour un détecteur particulier est égale à ou proche de la valeur de référence ou de la valeur moyenne déterminée pour la partie de matrice considérée, il peut être décidé que ce détecteur ne nécessite pas que le procédé de maintenance lui soit appliqué. Simultanément, les détecteurs auquel le procédé va être appliqué peuvent être sélectionnés à partir des valeurs de température/résistance qui ont été mesurées pour eux.

Une valeur seuil de température/résistance unique peut aussi être fixée pour tous les détecteurs de la matrice, de manière à les chauffer ensemble jusqu'à cette valeur-seuil commune. Dans ce cas, la valeur-seuil commune peut être fixée en fonction des valeurs qui ont été mesurées pour l'ensemble des détecteurs de la matrice, et éventuellement en fonction de propriétés thermodynamiques de la matrice. Elle peut aussi être fixée en fonction des valeurs qui ont été mesurées pour ceux des détecteurs de la matrice qui ont été dégradés antérieurement.

Lors d'une troisième étape du procédé de maintenance, les détecteurs sélectionnés sont chauffés par effet Joule jusqu'à la valeur-seuil de température/résistance qui a été fixée pour chacun d'eux.

Un tel chauffage peut être réalisé détecteur par détecteur, par exemple en alimentant individuellement la résistance active Rₚ de chacun d'eux avec un courant électrique approprié. Dans ce premier cas, il peut être nécessaire de chauffer chaque détecteur sélectionné l'un après l'autre, à cause d'interactions thermiques qui peuvent exister entre des détecteurs qui sont proches les uns des autres au sein de la matrice 1.

Alternativement, plusieurs ou tous les détecteurs sélectionnés peuvent être chauffés simultanément. De cette façon, une durée du procédé de maintenance peut être réduite. Dans ce second cas, des courants électriques peuvent être alimentés simultanément dans plusieurs résistances actives Rₚ de la matrice de détecteurs, d'une façon qui est appropriée pour chauffer en même temps les détecteurs sélectionnés jusqu'à les valeurs-seuils de température/résistance qui ont été fixées respectivement pour chacun d'eux. Ces courants peuvent alors être déterminés en utilisant un algorithme de traitement des températures et/ou des résistances mesurées respectivement pour les détecteurs sélectionnés. De cette façon, chaque détecteur peut être chauffé de façon plus précise jusqu'à la valeur-seuil correspondante de température/résistance, en tenant compte des interactions thermiques qui peuvent intervenir entre des détecteurs différents.

En particulier, tous les détecteurs qui sont sélectionnés pour subir le procédé de maintenance peuvent être chauffés à une même température. Cette température commune peut correspondre à une valeur-seuil maximale de température/résistance qui a été déterminée pour ces détecteurs.

Chaque détecteur auquel est appliqué le procédé de l'invention est chauffé de façon à supprimer, sinon réduire, des écarts de caractéristiques physico-chimiques que ce détecteur pouvait présenter antérieurement.

L'élément résistif sensible aux radiations d'un détecteur auquel est appliqué le procédé de maintenance est ainsi ramené dans un état physico-chimique de référence, qui peut correspondre à un état initial ou un état moyen de l'ensemble des éléments résistifs de la matrice. Dans le cadre de la présente invention, le terme état physico-chimique signifie toute caractéristique ou propriété physique, structurale ou chimique du matériau résistif sensible aux radiations. Typiquement, la température-seuil à laquelle un détecteur est chauffé peut être supérieure à 60°C, voire supérieure à 100°C.

Plus généralement, après dégradation d'un ou plusieurs pixels d'un ensemble de pixels d'une matrice, on peut réchauffer tous les pixels de celle-ci pour effacer localement l'effet d'une surexposition. Tous les pixels de la matrice sont alors mis dans un état de réchauffement commun, au dessus de ou à la température-seuil du procédé de maintenance.

En outre, le chauffage peut être ajusté pour éviter toute dégradation du matériau résistif sensible aux radiations que pourrait causer une température excessive. Pour cette raison notamment, la température à laquelle un détecteur est chauffé peut être inférieure à 200°C, voire inférieure à 180°C.

Lors d'une quatrième étape du procédé de maintenance, les détecteurs sélectionnés qui ont été chauffés selon le procédé de maintenance au dessus de la température-seuil, sont refroidis de façon contrôlée, en réduisant progressivement les courants alimentés dans les éléments résistifs utilisés pour le chauffage de la troisième étape. Un tel refroidissement contrôlé permet d'éviter de provoquer une trempe, qui pourrait laisser le matériau résistif sensible aux radiations de l'un des détecteurs dans un état instable. Typiquement, la durée de refroidissement peut être de plusieurs minutes, par exemple supérieure à dix minutes. L'Homme du métier sait ajuster la durée d'un tel refroidissement, en fonction de la nature du matériau résistif sensible aux radiations, et de la capacité de son environnement à dissiper de la chaleur.

En particulier, la quatrième étape du procédé peut être contrôlée de sorte qu'au moins les détecteurs chauffés auxquels est appliqué le procédé de maintenance refroidissent simultanément, d'une façon synchronisée et identique. Autrement dit, le refroidissement est uniforme pour ces détecteurs de sorte que la température des éléments résistifs chauffés soit homogène.

Pour les troisième et quatrième étapes du procédé de maintenance, l'alimentation en courant électrique d'éléments résistifs de la matrice 1 peut être réalisée soit en mode continu, soit par impulsions. Dans le premier cas, chaque courant électrique est contrôlé par une intensité de celui-ci. Dans le second cas, il peut être contrôlé par l'intermédiaire d'un rapport cyclique d'impulsions. On bénéficie ainsi des inerties thermiques, et notamment des constantes de temps thermiques des détecteurs. Le rapport cyclique, si l'on veut réchauffer, aura une période inférieure à ou du même ordre de grandeur que la constante de temps thermique de chaque détecteur. A contrario, si l'on veut refroidir progressivement, le rapport cyclique aura une période supérieure à la constante de temps thermique des détecteurs.

En outre, les courants qui sont alimentés dans les éléments résistifs de la matrice 1 peuvent être asservis à des résultats de mesures de température/résistance qui sont répétées au cours des troisième et quatrième étapes. Un tel asservissement peut participer à assurer que les températures-seuils/résistances-seuils ne sont pas dépassées, et que le refroidissement est conforme à une variation prédéterminée.

Un ensemble de mesure de radiations électromagnétiques qui est adapté pour un procédé de maintenance selon l'invention peut avoir la structure logique qui est représentée sur la figure 4. Il comprend la matrice de détecteurs 1, qui est associée à un système d'adressage 40. Le système d'adressage 40 permet d'envoyer un courant électrique dans l'élément résistif sensible aux radiations d'un détecteur quelconque de la matrice 1, ce détecteur étant identifié par ses coordonnées matricielles. Le système d'adressage 40 permet aussi de transmettre un signal électrique qui est produit par un détecteur quelconque de la matrice 1, identifié de la même façon. En particulier, ce signal transmis peut représenter la valeur de la résistance électrique de l'élément résistif sensible aux radiations, pour le détecteur identifié.

Le système d'adressage 40 est de préférence de type CMOS (pour «Complementary Metal Oxide Semi-conductor» en anglais), par opposition à un système de type CCD (pour «Charge Coupled Device»). En effet, un adressage du type CMOS permet de sélectionner aisément un ou plusieurs détecteurs de la matrice 1. Il donne aussi la possibilité de commander la puissance électrique qui est envoyée dans chaque détecteur.

En mode de fonctionnement de détection de radiation, les signaux représentatifs des valeurs de résistance électrique des détecteurs sont transmis à des moyens de lecture 50. Ceux-ci peuvent être adaptés pour produire une image thermique de la scène radiative vers laquelle est orienté l'ensemble de mesure. Cette image peut alors être transmise à une unité d'enregistrement 60.

Les moyens supplémentaires de l'ensemble de mesure de radiations, qui sont dédiés à la maintenance de la matrice 1, sont référencés 100 sur la figure 4. Ils peuvent comprendre une unité de traitement de températures 10, une unité de calcul de courants 20, une unité d'alimentation électrique 30 et des moyens de mesure. Selon un mode de réalisation avantageux, les moyens de mesure qui sont utilisés pour le procédé de maintenance peuvent être combinés avec les moyens de lecture 50 qui sont utilisés pour la détection de radiations.

L'unité de traitement 10 peut recevoir des signaux représentatifs des températures qui sont mesurées pour certains au moins des détecteurs de la matrice 1. A partir de ces signaux de mesure, elle détermine les températures-seuils auxquelles, ou au-delà desquelles, doivent être chauffés les détecteurs identifiés. Eventuellement, l'unité de traitement 10 peut sélectionner les détecteurs qui nécessitent d'être chauffés.

L'unité de calcul 20 détermine, à partir températures-seuils déterminées par l'unité de traitement 10, et pour les détecteurs sélectionnés par cette dernière, les courants électriques qui doivent être fournis à certains des détecteurs de la matrice 1, afin que chaque détecteur identifié pour le procédé de maintenance atteigne la température-seuil correspondante. Eventuellement, les deux unités 10 et 20 peuvent être regroupées dans une même entité.

Enfin, l'unité d'alimentation 30 produit des courants électriques conformes à des consignes de courants qui sont transmises par l'unité de calcul 20. Ces courants sont transmis par le système d'adressage 40 aux détecteurs de la matrice 1 identifiés par leurs coordonnées matricielles, elles-mêmes produites par l'unité de calcul 20.

L'unité de calcul 20 peut aussi être adaptée pour commander l'unité d'alimentation 30 pendant l'étape de refroidissement, afin que l'unité d'alimentation 30 produise des courants qui décroissent progressivement sur une durée déterminée après que les températures-seuils ont été atteintes. Eventuellement, ce refroidissement peut être contrôlé par une boucle d'asservissement faisant intervenir les moyens de mesure 50 et les unités 20 et 30.

Il est entendu que la mise en oeuvre de l'invention qui a été décrite en détail ci-dessus peut être adaptée ou modifiée tout en conservant certains au moins des avantages qui ont été cités. En particulier, des adaptations de la structure logique de la figure 4 pourront être introduites par l'Homme du métier, sans toutefois modifier significativement le procédé de maintenance lui-même. Parmi les avantages principaux de l'invention, il est rappelé que celle-ci permet de supprimer un four ou un élément Peltier incorporé dans l'ensemble de détection, et dédié à la maintenance des détecteurs de type bolomètres selon l'art antérieur.

## Revendications

1. Procédé de maintenance d'une matrice (1) de détecteurs de type bolomètres, adaptés pour mesurer des radiations électromagnétiques issues d'une scène radiative, ledit procédé étant adapté pour arrêter une rémanence d'une surexposition radiative subie par l'un au moins des détecteurs de la matrice, et comprenant les étapes suivantes exécutées en dehors d'un cycle de mesure de radiations :
/1/ mesure d'une température et/ou d'une résistance électrique d'un élément résistif d'au moins un détecteur identifié de la matrice ;
/2/ pour ledit détecteur identifié, fixation d'une température-seuil et/ou d'une résistance-seuil, respectivement supérieure à la température mesurée et/ou inférieure à la résistance mesurée à l'étape /1/ ;
/3/ alimentation d'un élément résistif d'au moins un détecteur de la matrice, avec un courant électrique adapté pour chauffer ledit détecteur identifié au moins jusqu'à ladite température-seuil et/ou la résistance-seuil ; et
/4/ refroidissement dudit détecteur identifié, en réduisant progressivement le courant électrique alimenté dans l'élément résistif du détecteur utilisé à l'étape /3/ pour chauffer ledit détecteur identifié.
suivant lequel l'étape /3/ est exécutée de façon à modifier l'état physico-chimique d'un matériau du détecteur identifié, ledit matériau modifié étant sensible aux radiations électromagnétiques lors d'un cycle de mesure de radiations.

2. Procédé selon la revendication 1, suivant lequel la température-seuil et/ou la résistance-seuil est fixée à l'étape /2/ en fonction d'un écart entre la température et/ou de la résistance mesurée à l'étape /1/ pour ledit détecteur identifié et une valeur de référence de température et/ou de résistance, respectivement.

3. Procédé selon la revendication 1 ou 2, comprenant une étape supplémentaire de sélection du détecteur identifié, exécutée entre les étapes /1/ et /2/, après laquelle les étapes /2/ à /4/ ne sont exécutées pour ledit détecteur identifié que si la température et/ou de la résistance mesurée à l'étape /1/ pour ledit détecteur identifié satisfont une condition de sélection fixée.

4. Procédé selon la revendication 3, suivant lequel la condition de sélection est fixée de sorte que le détecteur identifié est sélectionné pour les étapes /2/ à /4/ si ledit détecteur identifié présente une rémanence d'une surexposition radiative ou d'une dégradation subie antérieurement lors de son fonctionnement.

5. Procédé selon l'une quelconque des revendications précédentes, suivant lequel l'alimentation en courant électrique de l'étape /3/, de même que l'étape supplémentaire éventuelle de sélection du détecteur identifié, est effectuée au moyen d'un adressage du type CMOS.

6. Procédé selon l'une quelconque des revendications précédentes, suivant lequel l'élément résistif de détecteur utilisé à l'étape /3/ pour chauffer le détecteur identifié appartient audit détecteur identifié.

7. Procédé selon l'une quelconque des revendications précédentes, suivant lequel le détecteur identifié est chauffé à l'étape /3/ jusqu'à une température supérieure à 60°C, de préférence supérieure à 100°C.

8. Procédé selon l'une quelconque des revendications précédentes, suivant lequel l'étape /3/ est exécutée de façon à maintenir ledit détecteur identifié pendant une durée d'au moins une minute, à une température supérieure ou égale à la température-seuil et/ou à une résistance inférieure ou égale à la résistance seuil.

9. Procédé selon l'une quelconque des revendications précédentes, suivant lequel le refroidissement de l'étape /4/ a une durée supérieure à deux minutes, voire supérieure à dix minutes.

10. Procédé selon l'une quelconque des revendications précédentes, comprenant en outre une étape de mesure de températures et/ou de résistances respectives des détecteurs d'une partie au moins de la matrice, et suivant lequel la température-seuil et/ou la résistance-seuil est fixée à l'étape /2/ pour le détecteur identifié en fonction des températures et/ou des résistances mesurées pour les détecteurs de ladite partie de la matrice, en plus de la température et/ou de la résistance mesurée pour ledit détecteur identifié.

11. Procédé selon l'une quelconque des revendications précédentes, suivant lequel l'étape /1/ est réalisée pour plusieurs détecteurs identifiés,
et suivant lequel des courants électriques sont alimentés à l'étape /3/ simultanément à des éléments résistifs respectifs de plusieurs détecteurs de la matrice, lesdits courants électriques étant déterminés en utilisant un algorithme de traitement des températures et/ou des résistances mesurées respectivement pour lesdits détecteurs identifiés, de façon à chauffer simultanément lesdits détecteurs identifiés.

12. Procédé selon la revendication 11, suivant lequel lesdits détecteurs identifiés sont chauffés simultanément jusqu'à une température maximale commune.

13. Procédé selon l'une quelconque des revendications précédentes, exécuté automatiquement.

14. Ensemble de mesure de radiations électromagnétiques issues d'une scène radiative, comprenant :
- une matrice (1) de détecteurs de type bolomètres ;
- un système d'adressage (40) adapté pour identifier un détecteur quelconque de la matrice ; et
- des moyens (100) de maintenance de ladite matrice, adaptés pour mettre en oeuvre un procédé de maintenance conforme aux revendications 1 à 13,
les dits moyens de maintenance (100) comprenant eux-mêmes :
- des moyens (50) de mesure de températures et/ou de résistances d'éléments résistifs respectifs de détecteurs de la matrice, lesdits moyens de mesure étant adaptés pour fournir des signaux de mesure pour des détecteurs identifiés de la matrice ;
- une unité (10) de traitement des températures et/ou des résistances mesurées par les moyens de mesure pour lesdits détecteurs identifiés, ladite unité de traitement étant adaptée pour déterminer une température-seuil et/ou une résistance-seuil pour chacun desdits détecteurs identifiés ; pour laquelle l'état physico-chimique d'un matériau sensible aux radiations électromagnétiques du détecteur est modifié.
- une unité d'alimentation en courant électrique (30), reliée aux détecteurs de la matrice par le système d'adressage (40) ; et
- une unité (20) de calcul d'au moins un courant électrique à fournir par l'unité d'alimentation à au moins un détecteur de la matrice, pour que chaque détecteur identifié atteigne une température supérieure ou égale à la température-seuil, et/ou une résistance inférieure ou égale à la résistance-seuil, déterminée pour ledit détecteur identifié, ladite unité de calcul étant adaptée en outre pour contrôler une réduction progressive dudit courant électrique.

15. Ensemble selon la revendication 14, dans lequel les moyens de maintenance (100) sont adaptés pour contrôler une exécution automatique du procédé de maintenance.

## Patentansprüche

1. Verfahren zur Wartung einer Matrix (1) aus Detektoren, die von der Art Bolometer und geeignet sind, um aus einer strahlenden Umgebung stammende elektromagnetische Strahlungen zu messen, wobei das Verfahren geeignet ist, um eine Remanenz einer Strahlungsüberbelichtung mindestens eines der Detektoren der Matrix aufzuhalten, und die folgende Schritte umfasst, die außerhalb eines Strahlungsmesszyklus ausgeführt werden:
/1/ Messen einer Temperatur und/oder eines elektrischen Widerstandes eines Widerstandselementes mindestens eines identifizierten Detektors der Matrix;
/2/ für den identifizierten Detektor, Festlegen eines Temperaturgrenzwertes und/oder eines Widerstandsgrenzwertes, jeweils höher als die gemessene Temperatur und/oder niedriger als der in Schritt /1/ gemessene Widerstand;
/3/ einem Widerstandselement mindestens eines Detektors der Matrix einen elektrischen Strom zuführen, der geeignet ist, um den identifizierten Detektor zumindest bis zu dem Temperaturgrenzwert und/oder dem Widerstandsgrenzwert zu erhitzen; und
/4/ Abkühlen des identifizierten Detektors durch progressives Absenken des dem Widerstandselement des Detektors zugeführten elektrischen Stroms, der in Schritt /3/ verwendet wird, um den identifizierten Detektor zu erhitzen,
wobei Schritt /3/ derart ausgeführt wird, dass der physiko-chemische Zustand eines Materials des identifizierten Detektors verändert wird, wobei das veränderte Material empfindlich gegenüber den elektromagnetischen Strahlungen während eines Strahlungsmesszyklus ist.

2. Verfahren nach Anspruch 1, wobei der Temperaturgrenzwert und/oder der Widerstandsgrenzwert in Schritt /2/ in Abhängigkeit einer Abweichung zwischen der Temperatur und/oder dem in Schritt /1/ gemessenen Widerstand und einem Temperaturbezugswert und/oder einem Widerstandsbezugswert für den identifizierten Detektor festgelegt wird

3. Verfahren nach Anspruch 1 oder 2, umfassend eine zusätzlichen Schritt zur Auswahl des identifizierten Detektors, der zwischen den Schritten /1/ und /2/ durchgeführt wird, und nach dem die Schritte /2/ bis /4/ für den identifizierten Detektor nur durchgeführt werden, wenn die Temperatur und/oder der Widerstand, der in Schritt /1/ für den identifizierten Detektor gemessen wurde, eine festgelegte Auswahlregel erfüllen.

4. Verfahren nach Anspruch 3, wobei die Auswahlregel derart festgelegt wird, dass der identifizierte Detektor für die Schritte /2/ bis /4/ ausgewählt wird, wenn der identifizierte Detektor eine Remanenz einer Strahlungsüberbelichtung oder eine zuvor während seines Betriebs erlittene Funktionsminderung aufweist.

5. Verfahren nach einem beliebigen der vorherigen Ansprüche, wobei die Versorgung mit elektrischem Strom in Schritt /3/ und in dem eventuellen zusätzlichen Schritt zur Auswahl des identifizierten Detektors mittels einer Adressiereinrichtung des Typs CMOS ausgeführt wird.

6. Verfahren nach einem beliebigen der vorherigen Ansprüche, wobei das zum Erhitzen des identifizierten Detektors in Schritt/3/ verwendete Widerstandselements des Detektors dem identifizierten Detektor angehört.

7. Verfahren nach einem beliebigen der vorherigen Ansprüche, wobei in Schritt /3/ der identifizierte Detektor auf eine Temperatur größer als 60°C, vorzugsweise größer als 100°C, erhitzt wird.

8. Verfahren nach einem beliebigen der vorherigen Ansprüche, wobei Schritt /3/ derart ausgeführt wird, dass der identifizierte Detektor mindestens eine Minute lang auf einer Temperatur höher oder gleich dem Temperaturgrenzwert und/oder auf einem Widerstand niedriger oder gleich dem Widerstandsgrenzwert gehalten wird.

9. Verfahren nach einem beliebigen der vorherigen Ansprüche, wobei das Abkühlen in Schritt /4/ länger als zwei Minuten dauert, sogar länger als zehn Minuten.

10. Verfahren nach einem beliebigen der vorherigen Ansprüche, außerdem umfassend einen Schritt zum Messen der Temperatur und/oder der Widerstände der Detektoren mindestens eines Abschnittes der Matrix, wobei der Temperaturgrenzwert und/oder der Widerstandsgrenzwert in Schritt /2/ für den identifizierten Detektor in Abhängigkeit der für die Detektoren des Abschnittes der Matrix gemessenen Temperaturen und/oder Widerstände und der für den identifizierten Detektor gemessenen Temperatur und/oder des Widerstandes festgelegt wird.

11. Verfahren nach einem beliebigen der vorherigen Ansprüche, wobei Schritt /1/ für mehrere identifizierte Detektoren durchgeführt wird und wobei in Schritt /3/ die elektrischen Ströme simultan den jeweiligen Widerstandselementen mehrerer Detektoren der Matrix zugeführt werden, wobei die elektrischen Ströme unter Verwendung eines Algorithmus zur Bearbeitung der für die identifizierten Detektoren jeweils gemessenen Temperaturen und/oder Widerstände derart bestimmt werden, dass die identifizierten Detektoren simultan erhitzt werden.

12. Verfahren nach Anspruch 11, wobei die identifizierten Detektoren simultan bis auf eine gemeinsame Höchsttemperatur erhitzt werden.

13. Verfahren nach einem beliebigen der vorherigen Ansprüche, das automatisch ausgeführt wird.

14. Einheit zum Messen von aus einer strahlenden Umgebung stammenden elektromagnetischen Strahlungen, umfassend:
- eine Matrix (1) aus Detektoren, die von der Art Bolometer sind;
- eine Adressiervorrichtung (40), die geeignet ist, um einen beliebigen Detektor der Matrix zu identifizieren; und
- Mittel (100) zur Wartung der Matrix, die geeignet sind, um das Wartungsverfahren nach den Ansprüchen 1 bis 13 durchzuführen, wobei die Mittel (100) zur Wartung umfassen:
- Mittel (50) zum Messen der Temperaturen und/oder der Widerstände der entsprechenden Widerstandselemente der Detektoren der Matrix, wobei die Messmittel geeignet sind, um Messsignale für die identifizierten Detektoren der Matrix bereitzustellen;
- eine Einheit (10) zur Bearbeitung der durch die Messmittel für die identifizierten Detektoren gemessenen Temperaturen und/oder Widerstände, wobei die Bearbeitungseinheit geeignet ist, um einen Temperaturgrenzwert und/oder einen Widerstandsgrenzwert für jeden der identifizierten Detektoren zu bestimmen, für den der physiko-chemische Zustand eines Materials, das empfindlich für elektromagnetische Strahlungen des Detektors ist, modifiziert wird;
- eine Einheit zur elektrischen Stromversorgung (30), die mit den Detektoren der Matrix über die Adressiervorrichtung (40) verbunden ist; und
- eine Einheit (20) zur Berechnung mindestens eines elektrischen Stromes, der von der Versorgungseinheit an mindestens ein Detektor der Matrix zu liefern ist, so dass jeder identifizierte Detektor eine Temperatur größer oder gleich dem Temperaturgrenzwert und/oder einen Widerstand kleiner oder gleich dem Widerstandsgrenzwert erreicht, der für den identifizierten Detektor vorgesehen ist, wobei die Recheneinheit außerdem geeignet ist, um ein progressives Absenken des elektrischen Stromes zu steuern.

15. Einheit nach Anspruch 14, wobei die Wartungsmittel (100) geeignet sind, um das automatische Ausführen des Wartungsverfahrens zu steuern.

## Claims

1. Method for maintenance of an array (1) of bolometer-type detectors suitable for measuring electromagnetic radiations originating from a radiating scene, said method being suitable for stopping persistence of a radiation overexposure experienced by at least one of the detectors of the array, and comprising the following steps performed apart from a radiation measurement sequence:
/1/ measurement of a temperature and/or electric resistance of a resistive element of at least one identified detector of the array;
/2/ for said identified detector, setting of a threshold temperature and/or threshold resistance, respectively greater than the temperature measured and/or less than the resistance measured in step /1/;
/3/ supply of a resistive element of at least one detector of the array, with an electric current suitable for heating the identified detector at least up to said threshold temperature and/or the threshold resistance; and
/4/ cooling of said identified detector, by progressively reducing the electric current supplied to the resistive element used in step /3/ for heating said identified detector.
wherein step /3/ is performed so as to modify a physico-chemical state of a material of the identified detector, said modified material being sensitive to electromagnetic radiation during a radiation measurement sequence.

2. Method according to claim 1, wherein the threshold temperature and/or the threshold resistance is set in step /2/ as a function of a deviation between the temperature and/or resistance measured in step /1/ for said identified detector and a temperature and/or resistance reference value, respectively.

3. Method according to claim 1 or 2, comprising an additional step for selecting the identified detector, performed between steps /1/ and /2/, after which steps /2/ to /4/ are performed for said identified detector only if the temperature and/or resistance measured in step /1/ for said detector satisfy a defined selection condition.

4. Method according to claim 3, wherein the selection condition is defined so that the identified detector is selected for steps /2/ to /4/ if said identified detector has persistence of a radiation overexposure or damage experienced previously, during the operation thereof.

5. Method according to any one of the preceding claims, wherein the electric current supply in step /3/, like the optional additional step for selecting the identified detector, is performed by means of CMOS type addressing.

6. Method according to any one of the preceding claims, wherein the detector resistive element used in step /3/ for heating the identified detector belongs to said identified detector.

7. Method according to any one of the preceding claims, wherein the identified detector is heated in step /3/ to a temperature greater than 60°C, preferentially greater than 100°C.

8. Method according to any one of the preceding claims, wherein step /3/ is performed so as to maintain said identified detector for a duration of at least one minute at a temperature greater than or equal to the threshold temperature, and/or at a resistance less than or equal to the threshold resistance.

9. Method according to any one of the preceding claims, wherein the cooling in step /4/ has a duration greater than at least two minutes, or greater than ten minutes.

10. Method according to any one of the preceding claims, further comprising a step for measuring the respective temperatures and/or resistances of the detectors of at least part of the array, and wherein the threshold temperature and/or the threshold resistance is set in step /2/ for the identified detector as a function of the temperatures and/or resistance measured for the detectors of said part of the array, in addition to the temperature and/or resistance measured for said identified detector.

11. Method according to any one of the preceding claims, wherein step /1/ is performed for a plurality of identified detectors, and wherein electric currents are supplied in step /3/ simultaneously to respective resistive elements of a plurality of detectors of the array, said electric currents being determined using an algorithm for processing the temperatures and/or resistances measured respectively for the identified detectors, so as to heat said identified detectors simultaneously.

12. Method according to claim 11, wherein said identified detectors are heated simultaneously up to a common maximum temperature.

13. Method according to any one of the preceding claims, performed automatically.

14. Assembly for measuring electromagnetic radiation from a radiation scene, comprising:
- an array (1) of bolometer-type detectors;
- an addressing system (40) suitable for identifying any detector in the array; and
- means (100) for maintaining said array, suitable for implementing a maintenance method according to claims 1 to 13.
wherein the maintenance means (100) themselves comprise:
- means (50) for measuring temperatures and/or resistances of respective resistive elements of detectors in the array, said measurement means being suitable for supplying measurement signals for identified detectors of the array;
- a unit (10) for processing the temperatures and/or resistances measured by the measurement means for said identified detectors, said processing unit being suitable for determining a threshold temperature and/or a threshold resistance for each of said identified detectors, for which the physico-chemical state of a material sensitive to electromagnetic radiation, of the detector, is modified;
- an electric current power supply unit (30), connected to the detectors of the array by the addressing system (40); and
- a unit (20) for computing at least one electric current to be supplied by the power supply unit to at least one detector of the array, so that each identified detector reaches a temperature greater than or equal to the threshold temperature, and/or a resistance less than or equal to the threshold resistance, determined for said identified detector, said computation unit being additionally suitable for controlling a progressive reduction of said electric current.

15. Assembly according to claim 14, wherein the maintenance means (100) are suitable for controlling automatic execution of the maintenance method.
